# EUROPEAN PATENT APPLICATION

(11) **EP 1 533 919 A2**
(43) Date of publication of application: **25.05.2005**
(21) Application number: 04078157.7
(22) Date of filing: 17.11.2004
(51) Int. Cl.: H04B 7/08

(54) **Antenna selection system, antenna selection method, and radio communication apparatus using the system and method**

(30) Priority: 19.11.2003 JP 2003388626
(71) Applicant: NEC Corporation, Minato-ku, Tokyo 108-01 (JP)
(72) Inventor: Tsukamoto, Tadashi, Nec Corporation, Minato-ku, Tokyo 108-01 (JP)
(74) Representative: Patentanwälte Wenzel & Kalkoff

(57) **Abstract**

An antenna that is larger in an RSSI signal level than another antenna is selected by an antenna selection control circuit by using the RSSI signal levels that exhibit the receiving state information of a plurality of antennas immediately after a common channel or an individual channel is set at the time of an event occurrence such as a transmission or reception start of a radio communication apparatus. An antenna is selected on the basis of the RSSI signal levels of the antennas in response to out-of-synchronization during communication through the individual channel. An antenna is selected on the basis of the RSSI signal levels of the antennas during communication through the common channel.

## Description

### BACKGROUND OF THE INVENTION

### 1. Field of the Invention

The present invention relates to an antenna selection system, an antenna selection method, and a radio communication apparatus using the system and method. In particular, it relates to an antenna selection system that selects one of plural antennas under control.

### 2. Description of the Related Art

The purpose of cellular phones is no longer merely that of conducting telephone calls, but they are increasingly applied in other fields such as the writing of e-mails or browsing of web-sites. This, among others, results in problems such as the housing cases being grasped such that they become obscured by the user's hand. On the other hand, design of cellular phones is oriented towards slimness of the housing body, which makes it desirable that the antenna itself be incorporated into the housing case as compared with conventional designs in which whip antennas project. In this case, since the position of the built-in antenna is fixed, the antenna is obscured by the hand depending on the manner of grasping the cellular phone, and no excellent antenna characteristic is exhibited. Also, folding cellular phones that can fold the housing case in two prevail now. In this case, the characteristic of the built-in antenna may change depending on the open or close state of the housing case.

In this case, the communication qualities seen from the user's viewpoint mainly lie in the transmission success rate, the reception success rate, and the communication continuation rate. In order to ensure those communication qualities in accordance with the above various application types, it is essential that two antennas are incorporated into the housing case, and an algorithm that changes over and selects those two antennas according to the application mode is provided.

In order to improve the transmission success rate with respect to the cellular phone having the two built-in antennas, it is required to select the antenna immediately after the transmission operation. Also, in order to improve the reception success rate, the antenna is selected immediately after the reception operation, and further in order to improve the communication continuation rate, it is required to optimally conduct the antenna selection during communication, respectively.

However, in a conventional system, since the execution of the algorithm of the antenna selection is limited to the waiting time or out of service, the dynamic antenna selection cannot be conducted when the communication starts or during communication. This is because the features of the CDMA (including Wideband-Code Division Multiple Access: WCDMA) system de-spreads a receiving signal that is sampled by a unit of 10 msec and uses the quality of a specific cell which is obtained by a decoded output as a judgment reference. That is, because the decoded output is used for judgment of the antenna selection, it is disadvantageous that it takes time to execute the antenna selection algorithm. Accordingly, the judgment speed of the quality of the specific cell in the cellular phone of the CDMA system gets low in a scene such as a communication start time or a communication duration where the high speed of the antenna selection algorithm is required. For that reason, it is difficult to apply a system using the decoded output for the antenna selection judgment.

Also, there has been proposed an antenna switching system in a diversity communication apparatus using a frequency hopping system (for example, refer to JP 2002-325056 A).

Therein, the receiving characteristics from two antennas are obtained from the received signal strength indicator (RSSI). The publication discloses a technique in which the selection control of the antenna is conducted on the basis of information of the RSSI.

However, since the antenna selection control is conducted at a timing of frequency hopping, the antenna selection immediately after the transmission operation, the antenna selection immediately after the reception operation, and the antenna selection during communication which are required by the cellular phone of the CDMA system are not taken into consideration.

### SUMMARY OF THE INVENTION

The object of the invention is to solve the above-mentioned problems and provide an antenna selection system, an antenna selectionmethod, and a radio communication apparatus, which are suitable for an antenna selection control at the time of communication start or during communication for which the antenna selection control at a high speed is required.

Another object is to provide an antenna selection system, an antenna selection method, and a radio communication apparatus, which can realize the antenna selection immediately after the transmission operation, the antenna selection immediately after the reception operation, and the antenna selection during communication.

In the antenna selection system and method according to the invention, the antenna selection control is conducted on the basis of the receiving characteristic information from a plurality of antennas in response to the occurrence of an event.

Optionally, the antenna selection control may be conducted on the basis of the receiving characteristic information from a plurality of antennas during communication through a common channel.

The radio communication apparatus according to the invention includes an antenna switching for selecting a plurality of antennas, an automatic gain control(AGC) circuit for outputting a receiving electric field strength signal corresponding to calculated receiving electric field strength of a receiving signal inputted from the antenna and a gain control signal, a de-spread circuit for de-spreading the gain control signal to output a decode signal, a quality monitor circuit for monitoring the receiving quality of the antenna from the receiving electric field strength signal and the decode signal, a status monitor circuit for monitoring an output of the quality monitor circuit and a device status, and an antenna selection control circuit for conducting the selection control of the antenna switch in accordance with an output of the status monitor circuit.

In an antenna selection system and method, and a radio communication apparatus according to an embodiment of the invention there may be provided
means for monitoring occurrence of an event in the radio communication apparatus; and
means for conducting antenna selection control on the basis of receiving characteristic information of the plurality of antennas in response to the occurrence of the event.

Also, there may be provided
means for conducting antenna selection control on the basis of receiving characteristic information of the plurality of antennas during communication through a common channel.

Furthermore, an embodiment of the invention provides for
an antenna selection system, which is used in a radio communication apparatus of a W-CDMA system having a plurality of antennas, the system implementing antenna selection control on the basis of receiving electric field strength information of the plurality of antennas.

Advantageously an embodiment of the invention provides for
a first step of monitoring occurrence of an event in the radio communication apparatus; and
a second step of conducting antenna selection control on the basis of receiving characteristic information of the plurality of antennas in response to the occurrence of the event in the radio communication apparatus.

Preferably, there is provided
a step of conducting antenna selection control on the basis of receiving characteristic of the plurality of antennas during communication through a common channel.

According to another embodiment of the invention there is provided
an antenna switching circuit for selecting a plurality of antennas;
an automatic gain control circuit for outputting a gain control signal of a received signal inputted from the plurality of antennas;
a receiving electric field strength calculating circuit for outputting a receiving electric field strength signal corresponding to calculated receiving electric field strength of the received signal inputted from the plurality of antennas;
a de-spread circuit for de-spreading the gain control signal to output a communication channel measurement signal;
a quality monitor circuit for monitoring the receiving qualityof the antenna fromthe receiving electric field strength signal and the communication channel measurement signal;
a status monitor circuit for conducting monitor control. necessary for switching the antenna according to a signal including the receiving electric field strength signal and monitor information on the device state which are outputted from the quality monitor circuit; and
an antenna selection control circuit for conducting the selection control of the antenna switching circuit according to the judgment of the status monitor circuit.

### BRIEF DESCRIPTION OF THE DRAWINGS

These and other objects, features and advantages of the invention will become more fully apparent from the following detailed description taken in conjunction with accompanying drawings. In the drawings:
Fig. 1 is a block diagram showing an embodiment of the invention;
Fig. 2 is a flowchart of the operation of one embodiment of the invention;
Fig. 3 is a flowchart of the operation of another embodiment of the invention;
Fig. 4 is a flowchart of the operation of still another embodiment of the invention; and
Fig. 5 is a flowchart of the operation of yet still another embodiment of the invention.

### DETAILED DESCRIPTION OF THE PREFERRED EMBODIMENTS

Hereinafter, eachembodiment will. be described in detail with reference to the drawings.

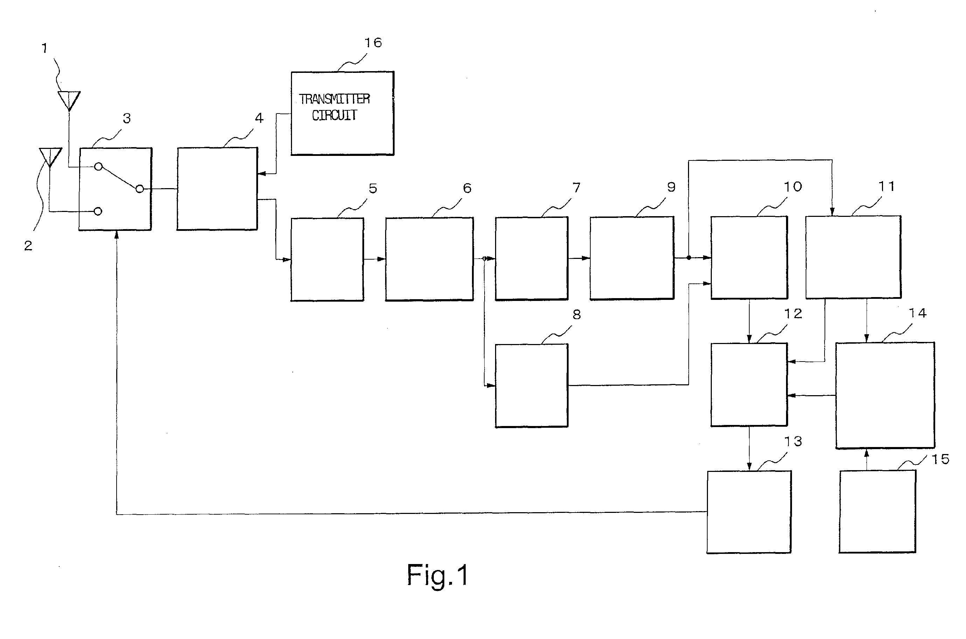

Referring to Fig. 1, a cellular phone is used in a communication system of the wide band-code division multiple access (W-CDMA) system; and incorporates two antennas 1 and 2 thereinto. Antennas 1 and 2 are switched over by an antenna switch 3. A receiving signal from the antenna is inputted to an RF receiver circuit 5 through a duplexer 4. The inputted receiving signal is demodulated by the RF receiver circuit 5 and then converted into a receiving digital signal by an A/D converter 6.

The receiving digital signal is outputted to an automatic gain control (AGC) circuit 7 and a received signal strength indicator (RSSI) circuit 8. The AGC circuit 7 conducts automatic gain control on the inputted receiving digital signal and outputs the signal to a de-spread circuit 9 as an AGC processed signal. The de-spread circuit 9 decodes the AGC processed signal and outputs the measurement data of the communication channel to a quality monitor circuit 10.

The RSSI circuit 8 calculates the receiving electric field strength (RSSI) of an antenna terminal fromthe receiving digital signal, and outputs a value of the receiving electric field strength (hereinafter referred to as "RSSI signal level") to the quality monitor circuit 10.

The quality monitor circuit 10 receives the measurement data of the communication channel from the de-spread circuit 9 and the RSSI signal level from the RSSI circuit 8, monitors the receiving quality of the antenna, and outputs the communication channel data and the RSSI signal level of the respective antennas to a status monitor circuit 12.

A data processing circuit 11 outputs out-of-service/in-service judgment information and error information from the measurement data of the communication channel from the de-spread circuit 9, to the status monitor circuit 12. Also, the data processing circuit 11 outputs the out-of-service/in-service judgment information to an application (APL) circuit 14.

The APL circuit 14 includes a program for various applications, and conducts application processing according to a program procedure. Also, the APL circuit 14 outputs open/close information of a terminal such as the confirmation of transmission and reception or the confirmation of the communication start/end, to the status monitor circuit 12.

The status monitor circuit 12 receives the communication channel measurement data and the RSSI signal of the respective antennas from the quality monitor circuit 10, the out-of-service/in-service judgment information from the data processing circuit 11, and a signal such as the open/close information of the terminal from the APL circuit 14, and outputs a monitor control signal necessary for antenna changeover to an antenna selection control circuit 13.

That is, the status monitor circuit 12 receives the above information from the quality monitor circuit 10, the data processing circuit 11 and the APL circuit 14, and monitors the device status such as the occurrence of the event. Here, the occurrence of the event indicates the status occurrence of transmission, reception, and out-of-synchronization.

The antenna selection control circuit 13 conducts the switching control of the antenna switch 3 in accordance with an output of the monitor control signal including the RSSI signal level of the status monitor circuit 12. A key terminal circuit 15 conducts interface with a user and inputs various commands to the cellular phone.

The antenna selection control circuit 13 shown in Fig. 1 switches the antenna according to the algorithm that selects the antenna 1 or 2. In the algorithm, the antenna changeover is conducted in the following three cases. That is, the RSSI signal levels included in the monitor control signal from the status monitor circuit 12 are compared with each other, and an antenna that is excellent in the characteristic is selected to improve the communication quality.
(1) Antenna selection at the time of setting a channel (first case):
   In the first case, a common channel and an individual channel are set by the status monitor circuit 12 at the time of a communication start in response to the event occurrence such as transmission or reception from a standby state with respect to a base station (not shown) . In this situation, since the RSSI signal level is calculated in the RSSI circuit 8 at a high speed as compared with the receiving frame rate, the comparison of the antenna reception characteristics is conducted by the antenna selection control circuit 13 according to the RSSI signal levels of the two antennas 1 and 2. After the comparison, the antenna that is excellent in the characteristic is selected. As a result, the transmission success rate and the reception success rate at the time of transmission and reception are improved.
(2) Antenna selection at the time of out-of-synchronization during individual channel communication (second case):
   In the second case, temporal out-of-synchronization (event occurrence of out-of-synchronization) caused by the receiving quality deterioration is detected by the status monitor circuit 12 during voice communication or packet communication using an individual channel. Here, "out-of-synchronization" indicates a non-synchronization state which is judgedby error information or a communication channel measurement value in each of reception blocks.
   In this situation, the antenna selection control circuit 13 compares the receiving characteristics of the two antennas 1 and 2 with each other by using the RSSI signal levels that have been calculated at high speed as compared with the receiving frame rate, and selects the antenna that is superior in characteristic. In this case, the reason that this case is limited to a time of out-of-synchronization is that an interrupt of voice communication due to a data error that always occurs at a moment of switching over the antenna is taken into consideration. As a result, since the antenna that is excellent in the receiving characteristic can be selected during out-of-synchronization, an environment excellent in the receiving quality is obtained at the time of restarting the reception.
(3) Antenna selection during common channel communication (third case):
   In the third case, downlink data may not be received for a given period of time during a packet communication through a random accessible common channel. The antenna selection control circuit 13 compares the receiving characteristics of the two antennas 1 and 2 by using the RSSI signal levels that have been calculated at high speed as compared with the receiving frame rate, and selects the antenna that is excellent in the characteristic. During the common channel communication, the received data is not obtained so far as any operation is not conducted by the user. For that reason, it cannot be judged whether no received data for a given period of time is attributable to the receiving quality or no operation. Accordingly, when comparison of the antenna changeover is conducted every given period of time, an appropriate antenna can be selected during communication, thereby making it possible to improve the communication continuation rate.

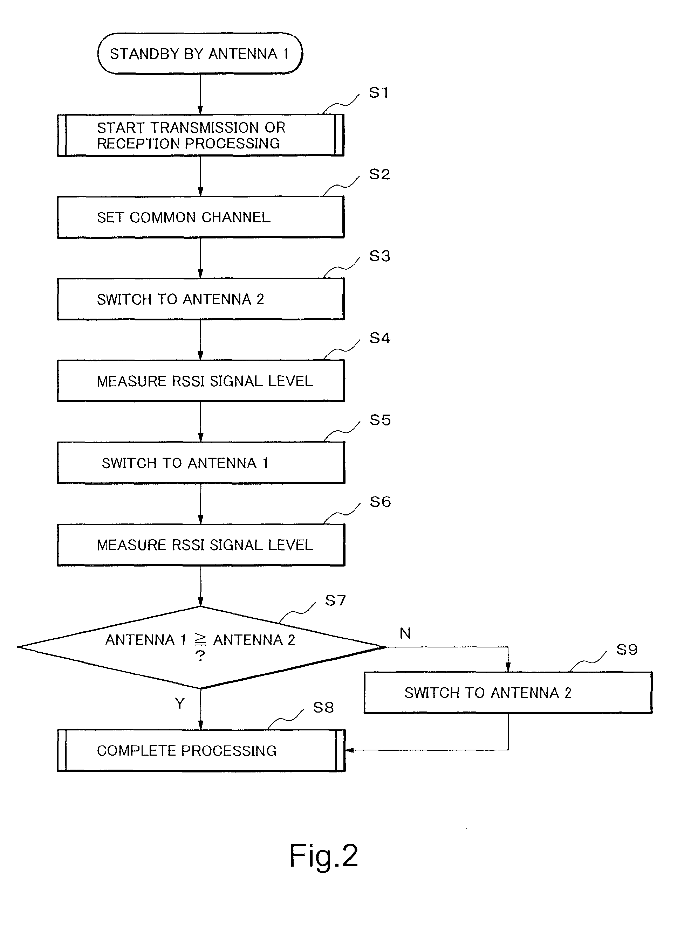

Hereinafter, operation of the embodiments according to the invention will be described in detail with reference to flowcharts shown in Figs. 2 to 5. A method of comparing the receiving characteristics of the two antennas 1 and 2 by using the RSSI signal levels which are calculated by the RSSI circuit 8 at a high speed as compared with the receiving frame rate, is common in the operations of Figs. 2 to 5.

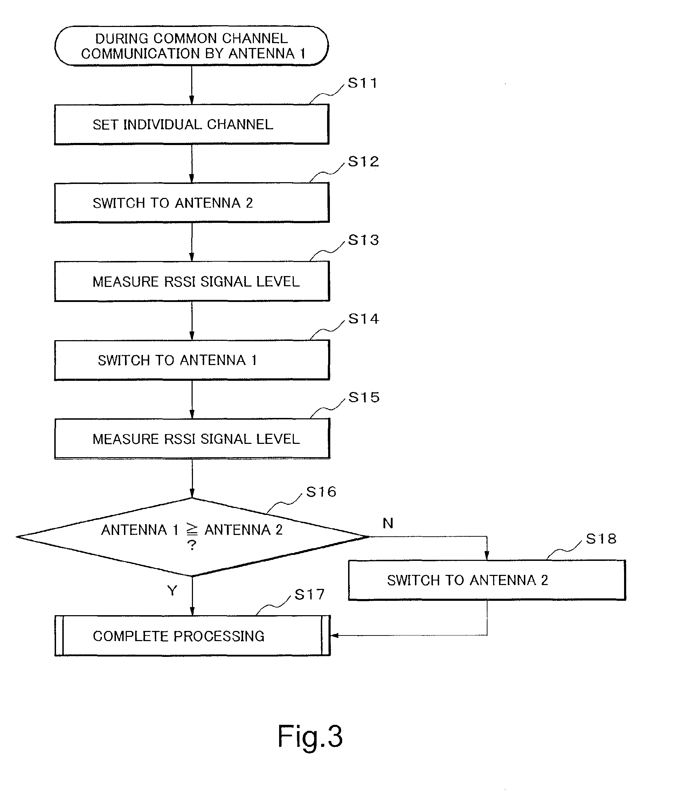

First, the antenna selection algorithm at the time of setting a channel in the first case will be described with reference to the flowcharts shown in Figs. 2 and 3. Fig. 2 shows the operation when a common channel is set with respect to a base station in response to the event occurrence of transmission or reception. Fig. 3 shows the operation when an individual channel is set after the operation of Fig. 2, that is, after the common channel has been set with respect to the base station.

First, the flowchart of Fig. 2 will be described. A standby state is made in the antenna 1. In this situation, the common channel is set due to the transmission and reception operation using the key terminal circuit 15 by the user (steps S1 and S2) . Then, the changeover to the antenna 2 is conducted according to a command from the antenna selection control circuit 13 (step S3), and the RSSI signal level is measured by the RSSI circuit 8 (step S4).

Then, the changeover to the antenna 1 is conducted according to the command from the antenna selection control circuit 13 (step S5), and the RSSI signal level is measured by the RSSI circuit 8 (step S6). The RSSI signal levels of both of the antenna 1 and the antenna 2 are compared by the antenna selection control circuit 13 (step S7), and one of the antennas which is larger in the RSSI signal level, that is, an antenna that is excellent in the receiving characteristic is selected (steps S8 and S9).

For example, if the RSSI signal level of antenna 1 is equal to or higher than the RSSI signal level of the antenna 2, antenna 1 that is being currently selected is used as it is (step S8). If not, antenna 2 is selected (step S9).

The reason that not antenna 1 of the standby state but another antenna 2 first changes over in step S3 and the RSSI signal level is measured is that the antenna changeover is prevented from occurring after the comparison of the measured results as much as possible. That is, this is based on the prediction that the probability of selecting and using the present antenna is high.

In Fig. 3 it is assumed that the antenna 1 is selected at the time of setting the common channel in the operation of Fig. 2. Subsequently, when the individual channel is set (step S11), the changeover to the antenna 2 is conducted according to the command from the antenna selection control circuit 13 (step S12), and the RSSI signal level is measured by the RSSI circuit 8 (step S13). Then, the changeover to antenna 1 is conducted (step S14), and the RSSI signal level is measured (step S15). Then, the RSSI signal levels of both antenna 1 and antenna 2 are compared by the antenna selection control circuit 13 (step S16) , and the one superior /excellent in the receiving characteristic is selected (steps S17 and S18).

That is, if the RSSI signal level of antenna 1 is equal to or higher than the RSSI signal level of antenna 2, antenna 1 that is being currently selected is used as it is, and the processing is completed (step S17) . If not, antenna 2 is selected (step S18).

Since the operation of Fig. 3 is conducted subsequent to the operation of Fig . 2 at the time of transmission and reception, two antenna changeovers and two comparisons of the RSSI signal levels are continuously conducted, respectively. This leads to the advantage that a selection error due to an instant variation in the RSSI signal levels is corrected.

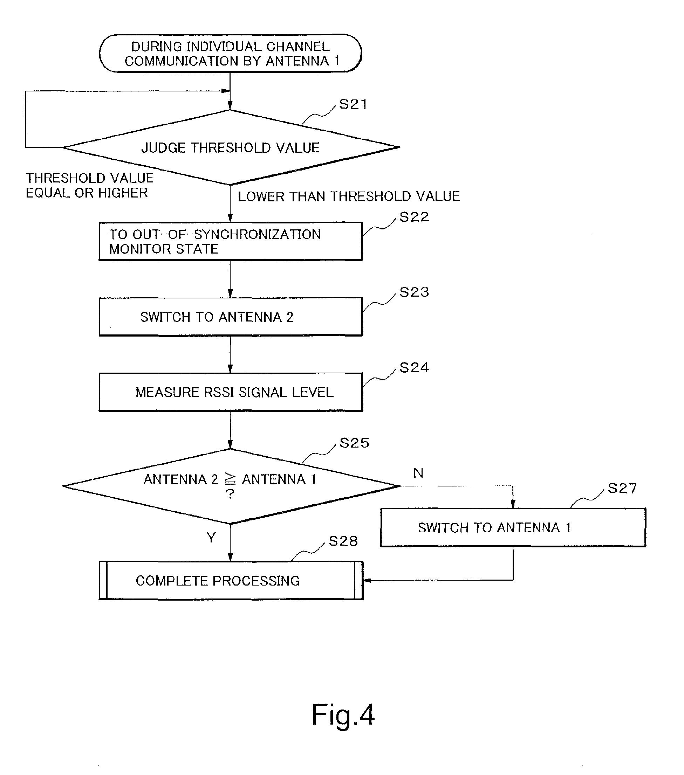

Subsequently, the antenna selection algorithm at the time of out-of-synchronization during the individual channel communication in the second case will be described with reference to the flowchart shown in Fig. 4. It is assumed that communication through an individual channel is conducted by the antenna 1. During the communication, the threshold value of the quality in the received data is always judged by the quality monitor circuit 10 shown in Fig. 1 by using the measurement data of the communication channel and the RSSI signal level (step S21). If the judgment result is that the receiving quality is lower than the threshold value, the status monitor circuit 12 shifts to an out-of-synchronization monitor state (this state is also a kind of event) (step S22). In the out-of-synchronization monitor state, if a state in which the receiving quality is lower than the threshold value continues, for example, for a given period of time or longer, the out-of-synchronization is detected.

When the out-of-synchronization is detected by the status monitor circuit 12, antenna 1 is switched to antenna 2 according to the command of the antenna selection control circuit 13 (step S23), and the RSSI signal level is measured by the RSSI circuit 8 (step S24) . The RSSI signal level of antenna 1 is known since the RSSI signal level of antenna 1 is always measured during communication, and it is unnecessary to newly measure the RSSI signal level.

The RSSI signal levels of both antenna 1 and antenna 2 are compared with each other by the antenna selection control circuit 13 (step S25), and one of those antennas 1 and 2 which is excellent in the receiving characteristic is selected (steps S26 and S27) . That is, if the RSSI signal level of the antenna 2 is equal to or higher than the RSSI signal level of antenna 1, antenna 2 that is being currently selected is used as it is (step S26). If not, antenna 1 is selected (step S27).

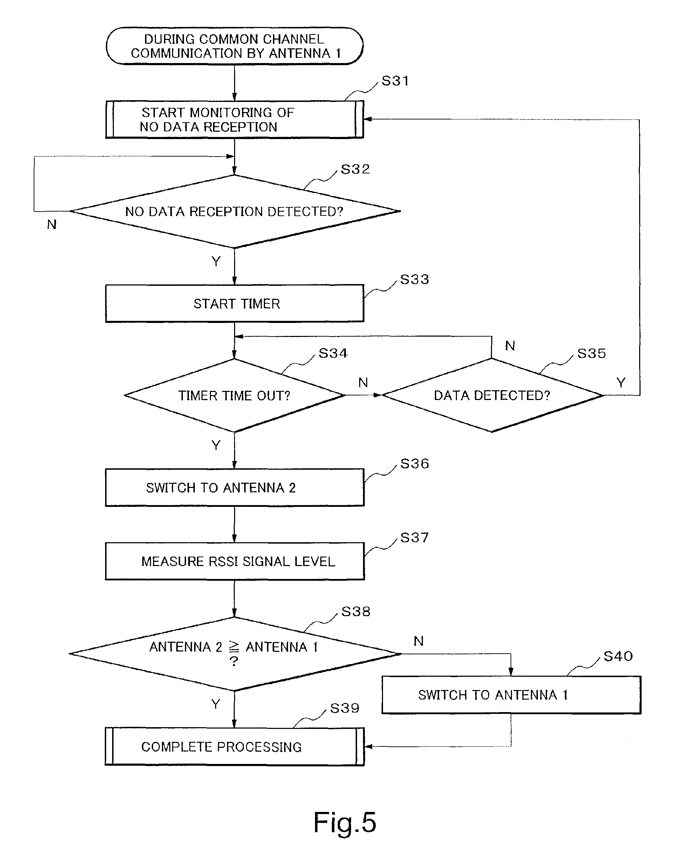

The antenna selection algorithm during the common channel communication in the third case will be described with reference to Fig. 5. In this situation, it is assumed that communication using a common channel is conducted by the antenna 1. The monitor of no data reception is started by the status monitor circuit 12 during the common channel communication by using the measurement data of the communication channel and the RSSI signal level (step S31) . When the no data reception state is detected (step S32), a timer is set to start (step S33).

In the case where a timermonitor is conducted by the antenna selection control circuit 13, and the timer times out (when a given period of time elapses) (step S34) , antenna 1 is switched to the other antenna 2 by the antenna selection control circuit 13 (step S36) , and the RSSI signal level of antenna 2 is measured by the RSSI circuit 8 (step S37).

The RSSI signal level of the current antenna 1 is known. Accordingly, the RSSI signal levels of both antenna 1 and antenna 2 are compared by the RSSI circuit 8 (step S38) , and the antenna that is excellent in the receiving property is selected (steps S39 and S40).

That is, if the RSSI signal level of antenna 2 is equal to higher than the RSSI signal level of antenna 1, antenna 2 that is being currently selected is used as it is (step S39) . If not, antenna 1 is selected (step S40).

If it is not time out in step S34, the presence/absence of data is detected (step S35). In the case where "no data" is detected,time out is waited for, and if "data" is detected, the control returns to step S31.

Also, in the standby (receiving standby state) , the antenna selection processing due to the above high-speed RSSI signal level judgment is executed in a cycle of the periodic changeover of the antenna which is conducted during standby. As a result, an improvement of the reception rate is expected. In the antenna selection system using the communication quality of a specific cell as in the conventional art, since a cell that is de-spread and decoded is used, a long-period operation is required, and it is feared that a continuous standby time is sacrificed. According to the present invention, since the high-speed antenna selection using the RSSI signal level can be conducted, an influence on the standby time can be suppressed as much as possible.

In this case, since the standby state can be regarded as one event, when the standby state is made (when an event occurs) , the above antenna selection algorithmmaybe cyclically executed.

In the receiving section of the W-CDMA system, the reference of the antenna receiving characteristic conventionally has used not an RF received signal, but the level of a base band signal that has been decoded by down-converting and de-spreading the RF received signal in frequency. This is because information on another cellular terminal is included in the received frequency of the W-CDMA system. However, there is actually a correlativity between an RSSI signal level and the level of the base band signal even if the RSSI signal level based on the RF received signal is used. For that reason, in the invention, the RSSI signal level that is obtained at a high speed is used as the receiving characteristic which is the judgment technique of the antenna selection algorithm.

It is possible that the above respective operation flows are made in such a manner that an operation procedure is stored in a recording medium as program in advance, and read by a computer so as to be executed. The above embodiment is optimum to the folding cellular phone of the W-CDMA system that is slimmed in which whip antennas are not projected from a housing case. However, the invention is not limited to this structure, but is applicable to a cellular communication apparatus of another CDMA system or another communication system.

As described above, one of plural antennas which is excellent in the receiving quality is selected in response to the occurrence of various events in the cellular information terminal. Thus the transmission success rate, reception success rate, and communication continuation rate can be improved. More specifically, since an excellent antenna can be selected during transmission or reception operation, call failure is reduced.

Also, since an excellent antenna can be selected at the time of out-of-synchronization during communication, the success rate of re-connection gets high.

In addition, since the antenna can be selected at the time of no reception during communication, an environment of higher quality is obtained at the time of restarting the reception.

Furthermore, in the case of the CDMA system, instead of using the decoded output that has been de-spread as the judgment reference of the antenna selection algorithm, the received signal strength indicator (RSSI) which is antenna receiving electric field strength information is used, and therefore a high-speed antenna selection operation can be realized.

## Claims

1. An antenna selection system in a radio communication apparatus having a plurality of antennas, comprising:
means for monitoring occurrence of an event in said radio communication apparatus; and
means for conducting antenna selection control on the basis of receiving characteristic information of said plurality of antennas in response to the occurrence of said event.

2. The antenna selection system according to claim 1, wherein said receiving characteristic information comprises receiving electric field strength information.

3. The antenna selection system according to claim 1, wherein said monitor means monitors occurrence of transmission or reception as said event.

4. The antenna selection system according to claim 3, wherein said monitor means monitors setting start of a common channel or an individual channel on the basis of the occurrence of said transmission or reception as said event.

5. The antenna selection system according to claim 1, wherein said monitor means monitors occurrence of a reception standby state as said event, and said antenna selection control means cyclically conducts the antenna selection control in the reception standby state.

6. The antenna selection system according to claim 1, wherein said antenna selection control means includes switching means for switching over to a first antenna after switching over to a second antenna other than said first antenna which has been selected immediately before the operation start at the time of said event occurrence, and means for selecting said antenna on the basis of receiving electric field strength information of said first and second antennas after switching with the switching means.

7. The antenna selection system according to claim 1, wherein said monitor means monitors occurrence of out-of-synchronization during communication as said event.

8. The antenna selection system according to claim 7, wherein said out-of-synchronization comprises out-of-synchronization during communication through an individual channel.

9. An antenna selection system in a radio communication apparatus having a plurality of antennas, comprising:
means for conducting antenna selection control on the basis of receiving characteristic information of said plurality of antennas during communication through a common channel.

10. The antenna selection system according to claim 9, wherein said antenna selection control operation is conducted after a state of not receiving data through the common channel has been continued for a predetermined period of time.

11. The antenna selection system according to claim 9, wherein said antenna selection control means includes switching means for switching over to a second antenna other than a first antenna which has been selected immediately before the operation start, and means for selecting said antenna on the basis of receiving electric field strength information of said first antenna immediately before switching with said switching means, and receiving electric field strength information of said second antenna immediately after switching with said switching means.

12. An antenna selection system, which is used in a radio communication apparatus of a W-CDMA system having a plurality of antennas, the system implementing antenna selection control on the basis of receiving electric field strength information of said plurality of antennas.

13. The antenna selection system according to claim 12, wherein said radio communication apparatus comprises a portable information terminal.

14. An antenna selection method used in a radio communication apparatus having a plurality of antennas, comprising:
a first step of monitoring occurrence of an event in said radio communication apparatus; and
a second step of conducting antenna selection control on the basis of receiving characteristic information of said plurality of antennas in response to said occurrence of the event in said radio communication apparatus.

15. The antenna selection method according to claim 14, wherein said receiving characteristic information comprises receiving electric field strength information.

16. The antenna selection method according to claim 14, wherein said occurrence of the event comprises occurrence of transmission or reception.

17. The antenna selection method according to claim 16, wherein said occurrence of the event comprises setting start of a common channel or an individual channel on the basis of said occurrence of transmission or reception.

18. The antenna selecting method according to claim 14, wherein said occurrence of the event comprises occurrence of a reception standby state, and said step includes cyclically conducting said antenna selection control in said reception standby state.

19. The antenna selection method according to claim 14, wherein said second step includes a switching step of switching over to a first antenna after switching over to a second antenna other than the first antenna which has been selected immediately before the operation start, and a step of selecting the antenna on the basis of receiving electric field strength information of said first and second antennas after switching through said switching step.

20. The antenna selection method according to claim 14, wherein said occurrence of the event comprises occurrence of out-of-synchronization during communication.

21. The antenna selection method according to claim 20, wherein said out-of-synchronization comprises out-of-synchronization during communication through an individual channel.

22. An antenna selection method used in a radio communication apparatus having a plurality of antennas, comprising:
a step of conducting antenna selection control on the basis of receiving characteristic of said plurality of antennas during communication through a common channel.

23. The antenna selection method according to claim 22, wherein said antenna selection control operation is conducted after a state of not receiving data through the common channel has been continued for a predetermined period of time.

24. The antenna selection method according to claim 22, wherein said step includes a switching step of switching over to a second antenna other than a first antenna which has been selected immediately before the operation start, and a step of selecting the antenna on the basis of receiving electric field strength information of said first antenna immediately before switching through the switching step, and receiving electric field strength information of said second antenna immediately after switching through said switching step.

25. A radio communication apparatus, comprising:
an antenna switching circuit for selecting a plurality of antennas;
an automatic gain control circuit for outputting a gain control signal of a received signal inputted from said plurality of antennas;
a receiving electric field strength calculating circuit for outputting a receiving electric field strength signal corresponding to calculated receiving electric field strength of said received signal inputted from saidplurality of antennas;
a de-spread circuit for de-spreading said gain control signal to output a communication channel measurement signal;
a quality monitor circuit for monitoring a receiving quality of the antenna from said receiving electric field strength signal and said communication channel measurement signal;
a status monitor circuit for conducting monitor control necessary for switching the antenna according to a signal including said receiving electric field strength signal and monitor information on a device state which are outputted from said quality monitor circuit; and
an antenna selection control circuit for conducting the selection control of said antenna switching circuit according to a judgment of said status monitor circuit.

26. The radio communication apparatus according to claim 25,
wherein said antenna selection control circuit has an algorithm for selecting said plurality of antennas, and
wherein said algorithm is used to compare said receiving electric field strength signals that exhibit the receiving characteristic of said plurality of antennas with each other to select an antenna that is excellent in characteristic.
